# EUROPÄISCHE PATENTSCHRIFT

(11) **EP 0 589 184 B1**
(45) Veröffentlichungstag und Bekanntmachung des Hinweises auf die Patenterteilung: **20.05.1998**
(21) Anmeldenummer: 93112360.8
(22) Anmeldetag: 02.08.1993
(51) Int. Cl.: G07C 9/00, G07F 7/10

(54) **Verfahren zum Feststellen der Identität des Inhabers einer Chipkarte, insbesondere Kreditkarte**
Method for verifying the identity of the owner of a chip card, especially a credit card
Procédé de vérification de l'identité du propriétaire d'une carte à puce notamment d'une carte de crédit

(30) Priorität: 24.09.1992 DE 4231937
(43) Veröffentlichungstag der Anmeldung: 30.03.1994
(73) Patentinhaber: ROBERT BOSCH GMBH, 70442 Stuttgart (DE)
(72) Erfinder: Zinke, Joachim, Dr., D-61194 Niddatal (DE); Weber, Jens, Dr., D-65812 Bad Soden (DE)

(56) Entgegenhaltungen:
- EP-A- 0 099 476
- EP-A- 0 444 351
- DE-A- 3 129 282
- US-A- 3 896 266

## Beschreibung

Die Erfindung betrifft ein Verfahren zum Feststellen der Identität des Inhabers einer Chipkarte, insbesondere Kreditkarte.

Bei wichtigen Vorgängen, insbesondere bei Geldgeschäften oder Zutrittskontrollen kann es erforderlich sein zu prüfen, ob der Inhaber eines Berechtigungsdokuments, z. B. Zutritts-Chipkarte oder Kreditkarte mit der Person des rechtmäßigen Besitzers übereinstimmt. Der Einsatz von Spracherkennungseinrichtungen zum Feststellen der Identität einer Person ist bereits bekannt und wird auch in verschiedenen Branchen angewendet.

Die Anwendung einer Spracherkennungseinrichtung, um einen Telefon-Anrufer persönlich zu identifizieren, ist in der Fachzeitschrift Electronics vom 27.01.1981 ab Seite 53 beschrieben. Dabei geht es darum, daß bei der Abwicklung von Bankgeschäften einwandfrei erkannt werden kann, daß ein Anrufer diejenige Person ist, welche berechtigt ist, das beabsichtigte Geschäft abzuwickeln. Die dafür verwendete Spracherkennungseinrichtung wählt zufallsverteilt vier von den Worten aus, deren Referenzmuster in einem zentralen Speicher für den betreffenden Anrufer abgespeichert sind. Der Anrufer wird aufgefordert, diese Worte zu sprechen. Es findet dann ein Vergleich statt mit den von den aktuell eingesprochenen Worten gebildeten Referenzmustern. Erst dann, wenn bei diesem Vergleich ein positives Ergebnis vorliegt, wird es dem Anrufer ermöglicht, durch sprachlich eingegebene Befehle einen Auftrag einzugeben. Die Spracherkennungseinrichtung arbeitet in beiden Fällen, also sowohl bei der Sprechererkennung als auch bei der Erkennung eingegebener Befehle auf der Basis der Einzelworterkennung.

In diesem Aufsatz ist nicht beschrieben, auf welche Weise sich der Anrufer zunächst zu erkennen gibt, damit eine gezielte Auswahl aus den für ihn abgespeicherten Sprachreferenzmustern getroffen werden kann. In der mittleren Spalte auf Seite 53 ist angegeben, daß das System 3000 Sprachreferenzen speichern kann. Dabei sind für jeden Benutzer 16 Worte vorgegeben. Dies bedeutet, daß ein Vergleich zunächst mit allen Sprachreferenzmustern stattfinden muß, damit diejenigen erkannt werden können, welche zu dem betreffenden Anrufer gehören. Hierzu wird möglicherweise eine ziemlich lange Zeit benötigt. Diese Zeit kann sich bei einer größeren Anzahl von zugelassenen Benutzern als unerträgliche Wartezeit auswirken.

Ein Verfahren zur sprecherabhängigen Erkennung von einzelnen gesprochenen Worten in Fernmeldesystemen ist aus der Schrift DE 31 29 282 Al bekannt. Die dort beschriebene Erfindung soll es ermöglichen, daß bei einem großen Personenkreis ein relativ großer Wortmusterspeicher entfallen kann, wobei die Sicherheit der Erkennung und die Fälschungssicherheit gewahrt bleiben soll. Zu diesem Zweck sind die zu einer Person gehörenen und von dieser Person zu sprechenden Worte als Sprachmuster auf einem Magnetstreifen gespeichert. Der Magnetstreifenträger, z. B. eine Chipkarte, wird dann in ein Eingabegerät eingeschoben, woraufhin das Eingabegerät eine willkürliche Auswahl aus den Worten trifft, die auf dem Magnetstreifen gespeichert sind und von der eingebenden Person zu sprechen sind. Das Bilden von Sprachparametern und der Vergleich mit den vom Magnetstreifen ausgelesenen bereits bestehenden Sprachparametern wird in einem Zentral angeordneten Spracherkennungssystem durchgeführt. Das Spracherkennungssystem entscheidet entsprechend dem Ergebnis des Vergleiches der Sprachreferenzmuster, ob der Sprecher berechtigt ist, den angeforderten Dienst in Anspruch zu nehmen.

Die zugehörige Magnetkarte ist so auszustatten, daß zusätzliche Speicherkapazität für die Aufnahme von Sprachreferenzmustern zur Verfügung steht. Der Preis einer derartigen Chipkarte wird sich dann entsprechend erhöhen. Bei Chipkarten, welche universell an verschiedenen Eingabegeräten geprüft werden sollen, wie dies beispielsweise bei Kreditkarten der Fall sein kann, könnten sich Schwierigkeiten ergeben, wenn die Eingabegeräte nicht auf die Sprachdaten abgestimmt sind, welche auf dem Datenträger der Chipkarte aufgebracht sind.

Aus der US 3 896 266 ist ein Kartengebrauchssystem bekannt, bei dem ein Fernsprechendgerät über eine öffentliche Telefonleitung mit einem Sprachanalysator verbunden ist. Bei dem Fernsprechendgerät ist ein Kartenleser angebracht, der ebenfalls über die Telefonleitung mit dem Sprachanalysator verbunden ist. Auf einer Karte kann der Zugangscode zu einem spezifischen Speicherbereich eines Computerspeichers gespeichert sein. Der Computerspeicher enthält Sprachreferenzdaten aller ermächtigten Kartenbesitzer und gehört zum Sprachanalysator. Wenn die auf der Karte gespeicherten Daten vom Kartenleser gelesen und zum Sprachanalysator übertragen werden, findet ein Aufruf des entsprechenden Speicherbereichs im Computerspeicher statt. Der Computerspeicher liefert dann die geeigneten Sprachreferenzdaten zum Vergleich mit den vom Kartenbesitzer am Fernsprechendgerät zu sprechenden und über die Telefonleitung zum Sprachanalysator zu übertragenden Worte. Der Vergleich findet im Sprachanalysator statt.

Die Aufgabe der Erfindung besteht darin, ein Verfahren anzugeben, welches im Zusammenhang mit Kreditkarten benutzt werden kann, bei dem eine gezielte Ansteuerung von personenbezogenen Sprachreferenzdaten möglich ist, bei dem keine Speicherkapazität für Sprachreferenzdaten auf der Karte notwendig sein soll, und im zur Eingabe benutzten Endgerät keine Einrichtungen zur Spracherkennung benötigt werden sollen.

Zur Lösung dieser Aufgabe ist die Merkmalskombination des Patentanspruchs 1 angegeben.

Damit wird in vorteilhafter Weise erreicht, daß auf der Chipkarte keine Sprachmusterdaten zu dieser Karte eingespeichert sein müssen. Das Eingabegerät braucht nicht mit einer Spracherkennungseinrichtung ausgestattet zu sein, weil der Vergleich von Sprachreferenzdaten in einem teilzentralen Rechner durchgeführt wird, der für diese Aufgabe spezialisiert sein kann.

Vorteilhaft ist außerdem, daß die entstehenden Kosten für die Verbindungen zwischen dem Endgerät und dem Prüfrechner sehr gering sind und ganz entfallen, wenn der Prüfrechner an die gleiche Nebenstellenanlage angeschlossen ist, wie das Endgerät.

Ein Ausführungsbeispiel der Erfindung wird nachfolgend anhand einer Zeichnung näher erläutert.

Wenn die Identität des Inhabers einer Chipkarte, insbesondere einer Kreditkarte KK festgestellt werden soll, so kann dafür ein Fernsprechendgerät EG verwendet werden, welches über einen Kartenleser KL verfügt. Dieses Endgerät EG kann außerdem mit einer Anzeigeeinrichtung AE und einer Tastatur TA ausgestattet sein. Beim Einführen einer Kreditkarte KK in den Kartenleser KL werden zunächst die auf der Kreditkarte KK befindlichen Daten gelesen. Durch ein sprecherabhängiges Spracherkennungssystem kann eine zusätzliche Feststellung der Identität des Benutzers der Kreditkarte KK erfolgen. Dies geschieht auf folgende Weise.

Mit einer im Endgerät EG eingespeicherten Rufnummer wird entweder automatisch oder durch Betätigen einer Taste der Tastatur TA eine Verbindung zu einem Prüfrechner PR aufgebaut. Dieser Prüfrechner kann an eine Nebenstellenanlage NA ebenso wie auch an das Endgerät EG angeschlossen sein. Eine derartige Anschlußmöglichkeit kann beispielsweise in einem großen Kaufhaus zweckmäßig sein, wenn mehrere Endgeräte EG vorhanden sind, die mit Kartenlesern KL ausgestattet sind. Es besteht dann eine Internverbindung zwischen einem Endgerät EG und dem Prüfrechner PR. Der Prüfrechner kann jedoch auch an eine Vermittlungsstelle VSt A des öffentlichen Fernsprechnetzes angeschlossen sein, so daß vom Endgerät EG aus eine Amtsverbindung zum Prüfrechner PR besteht.

Die von der Kreditkarte KK ausgelesenen Daten werden über die bestehende Verbindung vom Endgerät EG zum Prüfrechner PR übermittelt. Daraufhin baut der Prüfrechner PR selbsttätig eine weiterführende Verbindung über das öffentliche Fernsprech- oder Datennetz FN zu einem Zentralrechner ZR auf. Dieser Zentralrechner ZR befindet sich bei demjenigen Kreditkartenunternehmen, von dem die im Endgerät EG befindliche Kreditkarte KK stammt. Bei der Verbindung zwischen dem Prüfrechner PR und dem Zentralrechner ZR kann es sich auch um eine Fernwahlverbindung über das internationale Netz handeln. Der Zentralrechner ZR ist im allgemeinen nur einmal vorhanden und enthält die Referenzmusterdaten von denjenigen Karteninhabern, welche für ihre Kreditkarte KK eine zusätzliche Identitätsprüfung gewünscht haben.

Wenn eine Verbindung zwischen dem Prüfrechner PR und dem Zentralrechner ZR gegebenenfalls über eine Nebenstellenanlage NA und die Vermittlungsstellen VSt A und VSt B des öffentlichen Fernsprech- oder Datennetzes zustande gekommen ist, so werden zunächst vom Prüfrechner PR die den Inhaber einer Kreditkarte KK kennzeichnenden Daten zum Zentralrechner übermittelt. Es handelt sich also um Informationen, die zuvor von der Kreditkarte KK abgelesen wurden. Im Zentralrechner werden daraufhin Speicherbereiche angesteuert, welche dem Besitzer der Kreditkarte KK zugeordnet sind. Daraufhin werden Referenzmusterdaten von mehreren Worten vom Zentralrechner ZR zum Prüfrechner PR übertragen. Zusätzlich zu diesen Daten kann noch eine Befehlsfolge übertragen werden, womit im Prüfrechner PR ein individueller Ansagetext generiert werden kann. Wenn der Prüfrechner PR Referenzmusterdaten und gegebenenfalls auch Ansagedaten empfangen hat, so kann die Verbindung zwischen dem Zentralrechner ZR und dem Prüfrechner PR wieder getrennt werden.

Mit den vom Zentralrechner ZR empfangen Daten werden nun im Prüfrechner Befehlsfolgen gebildet, womit ein Ansagetext generiert wird, welcher zum Endgerät gesendet wird. Anstelle oder zusätzlich zum Ansagetext können auch Informationen übermittelt werden, die in einer Anzeigeeinrichtung AE erscheinen. Mit dem Ansagetext oder der Anzeige kann der Inhaber der Kreditkarte KK persönlich angesprochen werden, wobei es sogar möglich ist, ihn in seiner Sprache zu begrüßen und ihm seinen Standort mitzuteilen, wenn zuvor eine Standortmeldung vom Endgerät EG in Richtung Zentralrechner ZR übertragen worden ist. Mit der Ansage oder der Anzeige wird der Karteninhaber außerdem aufgefordert, einige vorbestimmte Worte zu sprechen. Eine derartige Ansage oder Anzeige könnte beispielsweise wie folgt lauten: "XY (Name des Kreditkarten-Unternehmens) begrüßt Sie herzlich im Kaufhaus AB in Tokio und wünscht Ihnen einen guten Aufenthalt. Bitte sprechen Sie jetzt die folgenden Worte (es folgen z. B. vier Worte). Bitte sprechen Sie jetzt."

Wenn daraufhin der Inhaber der Kreditkarte KK die verlangten Worte in das Mikrofon des Fernsprechendgerätes EG einspricht, so gelangt diese Sprache über die bestehende Verbindung zum Prüfrechner PR. Im Prüfrechner werden aus diesen aktuell gesprochenen Worten mit Hilfe einer Sprachanalyseeinrichtung Sprachreferenzmuster gebildet, die nach dem gleichen Prinzip strukturiert sind, wie die Referenzmusterdaten, welche vom Zentralrechner ZR empfangen worden sind.

Der Prüfrechner PR führt nun einen Vergleich durch zwischen diesen aktuellen Sprachreferenzmustern und den Referenzmusterdaten, die vom Zentralrechner ZR empfangen worden sind. Wenn sich bei diesem Vergleich Übereinstimmungen ergeben, so kann die Kreditkarte KK zugelassen werden. Der Prüfrechner PR überträgt dann eine vom Prüfergebnis abhängige Meldung zum Endgerät EG. Diese Meldung kann sprachlich ausgegeben und/oder in einer Anzeigeeinrichung AE erscheinen. Vom Endgerät aus können zusätzliche Kriterien abgegeben werden, womit festgelegt werden kann wieviele Worte zu sprechen sind und wie genau der Prüfrechner PR beim Vergleichen der Referenzmuster vorgehen soll. Die Genauigkeit dieser Prüfung kann davon abhängig gemacht werden, wie hoch die Wertigkeit des Dienstes ist, der mit der Kreditkarte in Anspruch genommen werden soll.

Für das übertragen von Ansagetexten vom Prüfrechner PR zum Endgerät EG kann dort eine Ansageeinrichtung vorgesehen sein, welche in der Lage ist, aus vorbestimmten Textteilen einen Text zusammenzufügen, der mit Befehlen vom Zentralrechner ZR zusammengestellt wird. Die Ansage kann jedoch auch in künstlicher Sprache erfolgen, wenn mit den vom Zentralrechner ZR abgegebenen Informationen eine im Prüfrechner PR befindliche Sprachsyntheseeinheit SSy vorgesehen ist. Mit der Sprachansage und/oder mit Anzeigedaten können zusätzliche Bedienungshinweise zum Endgerät EG übertragen werden.

Als Endgerät EG eignet sich am besten ein Fernsprechendgerät, welches mit einem Kartenleser ausgestattet ist. Die wenigen zusätzlichen Merkmale, welche zur Bedienung und zur Korrespondenz mit dem Prüfrechner PR notwendig sind, lassen sich leicht in einer bereits vorhandenen programmierbaren Steuereinrichtung zusätzlich verwirklichen. Der Aufwand für eine sprecherabhängige Spracherkennung ist jedoch im Endgerät nicht notwendig, weil der teilzentrale Prüfrechner PR speziell dafür vorgesehen ist. Durch die Zusammenarbeit des Prüfrechners PR mit dem Zentralrechner ZR werden die Referenzmusterdaten vom Zentralrechner ZR in digitaler Form übertragen, so daß auch über längere Übertragungsstrecken keine Verfälschungen auftreten. Unter der Voraussetzung, daß der Prüfrechner PR sich in nicht allzu großer Entfernung, z. B. höchstens in der Ortsvermittlungsstelle VSt A befindet, ist auch bei analoger Sprachübertragung vom Endgerät EG zum Prüfrechner PR zu erwarten, daß ein einwandfreier Empfang der vom Karteninhaber gesprochenen Worte gewährleistet ist. Die zusätzlich entstehenden Kosten für die Verbindungen zwischen dem Endgerät und dem Prüfrechner PR sind sehr gering und entfallen ganz, wenn der Prüfrechner PR an die gleiche Nebenstellenanlage NA angeschlossen ist wie das Endgerät EG. Auch die Kosten für eine möglicherweise internationale Fernverbindung halten sich in Grenzen, weil bei schneller Datenübertragung die Verbindungszeit kurz sein kann.

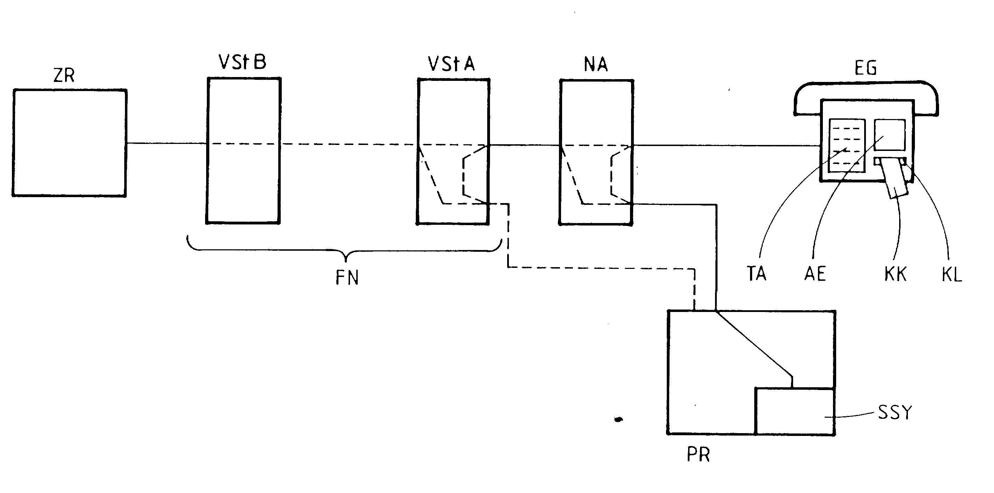

## Patentansprüche

1. Verfahren zum Feststellen der Identität des Inhabers einer Chipkarte, insbesondere Kreditkarte, in dem ein Spracherkennungssystem eingesetzt ist,
daß nach Eingabe der Chipkarte (KK) in den Kartenleser (KL) eines Endgerätes (EG) Daten von der Chipkarte (KK) gelesen werden,
daß automatisch oder durch Betätigen einer Taste eine Verbindung vom Endgerät (EG) zu einem Prüfrechner (PR) aufgebaut wird, um die gelesenen Daten zu diesem Prüfrechner (PR) zu übertragen,
daß der Prüfrechner (PR) anhand der Daten entscheidet, ob eine sprachliche Überprüfung des Karteninhabers stattfinden soll,
daß für den letzteren Fall automatisch eine Verbindung über das öffentliche Fernsprech- oder Datennetz vom Prüfrechner (PR) zu einem Zentralrechner (ZR) aufgebaut wird, um in diesem Zentralrechner (ZR) gespeicherte Referenzmusterdaten von Worten aus der Sprache des Karteninhabers zum Prüfrechner (PR) zu übertragen,
daß der Prüfrechner (PR) nach Empfang der Referenzmusterdaten eine Meldung an das Endgerät (EG) liefert, nach der der Karteninhaber aufgefordert wird, die bestimmten vorgegebenen Worte zu sprechen,
daß der Prüfrechner (PR) nach Empfang dieser aktuell gesprochenen Worte vom Endgerät (EG) aus diesen Worten Sprachreferenzmuster bildet, um diese mit den Referenzmusterdaten aus dem Zentralrechner (ZR) zu vergleichen,
und daß der Prüfrechner (PR) anhand des Vergleichsergebnisses über die Zulässigkeit der Chipkarte entscheidet.

2. Verfahren nach Anspruch 1,
**dadurch gekennzeichnet,**
daß der Zentralrechner (ZR) dem Prüfrechner (PR) den Kartenbesitzer betreffende Ansage-Sprachdaten zusammen mit den Referenzmusterdaten übermittelt, womit im Prüfrechner (PR) ein für den Kartenbesitzer bestimmter Ansagetext zusammengestellt werden kann, welcher über die bestehende Verbindung zum Endgerät (EG) übermittelt wird.

3. Verfahren nach Anspruch 2,
**dadurch gekennzeichnet,**
daß sich im Prüfrechner (PR) eine Sprachsyntheseeinheit (SSY) befindet, und daß der Ansagetext in synthetischer Sprache übermittelt wird.

4. Verfahren nach Anspruch 2,
**dadurch gekennzeichnet,**
daß im Ansagetext auch Angaben über den Standort des Endgerätes (EG) enthalten sein können, wenn derartige Daten zuvor vom Prüfrechner (PR) an den Zentralrechner (ZR) übermittelt wurden.

5. Verfahren nach Anspruch 2,
**dadurch gekennzeichnet,**
daß anstelle des Ansagetextes oder zusätzlich zu diesem auch Anzeigedaten vom Prüfrechner (PR) zum Endgerät (EG) übermittelt werden, wenn sich dort eine Anzeigeeinrichtung (AE) befindet.

6. Verfahren nach Anspruch 1,
**dadurch gekennzeichnet,**
daß der Prüfrechner (PR) an eine Fernsprechnebenstellenanlage (NA) angeschlossen ist.

7. Verfahren nach Anspruch 1,
**dadurch gekennzeichnet,**
daß der Prüfrechner (PR) an eine Vermittlungsstelle (VSt A) des öffentlichen Fernsprech- oder Datennetzes (FN) angeschlossen ist.

8. Verfahren nach Anspruch 1,
**dadurch gekennzeichnet,**
daß der Prüfrechner (PR) beim Vergleichen der Sprachreferenzmuster den Umfang und die zulässige Abweichung von den Referenzmusterdaten dieser Prüfung abhängig macht vom zu gewährenden Kreditbetrag, der zuvor vom Endgerät (EG) empfangen wurde.

## Claims

1. Method of establishing the identity of the holder of a chip card, in particular a credit card, in which a speech recognition system is used, characterized
in that, after the chip card (KK) has been put into the card reader (KL) of a terminal (EG), data are read from the chip card (KK),
in that automatically or by actuating a key, a connection is set up from the terminal (EG) to a testing computer (PR) in order to transmit the data read to this testing computer (PR),
in that the testing computer (PR) decides, using the data, whether a linguistic check on the cardholder is to take place,
in that for the latter case, a connection is set up automatically via the public telephone or data network from the testing computer (PR) to a central computer (ZR) in order to transmit reference pattern data, stored in this central computer (ZR) of words from the speech of the cardholder to the testing computer (PR),
in that after receiving the reference pattern data the testing computer (PR) supplies a message to the terminal (EG), in accordance with which message the cardholder is requested to speak the specified predetermined words,
in that after receiving these currently spoken words from the terminal (EG) the testing computer (PR) forms, from these words, speech reference patterns in order to compare these with the reference pattern data from the central computer (ZR),
and in that the testing computer (PR) decides on the admissibility of the chip card using the comparison result.

2. Method according to Claim 1, characterized in that the central computer (ZR) transmits to the testing computer (PR) dictation speech data relating to the owner of the card together with the reference pattern data, with which a dictation text intended for the owner of the card can be put together in the testing computer (PR) which text is transmitted to the terminal (EG) via the existing connection.

3. Method according to Claim 2, characterized in that there is in the testing computer (PR) a speech synthesis unit (SSY) and in that the dictation text is transmitted in synthetic speech.

4. Method according to Claim 2, characterized in that statements about the location of the terminal (EG) may also be contained in the dictation text, if such data were previously transmitted from the testing computer (PR) to the central computer (ZR).

5. Method according to Claim 2, characterized in that, instead of the dictation text, or in addition thereto, display data may also be transmitted from the testing computer (PR) to the terminal (EG), if there is a display device (AE) there.

6. Method according to Claim 1, characterized in that the testing computer (PR) is connected to a telephone private branch exchange (NA).

7. Method according to Claim 1, characterized in that the testing computer (PR) is connected to a telephone exchange (VSt A) of the public telephone or data network (FN).

8. Method according to Claim 1, characterized in that the testing computer (PR), when comparing the speech reference patterns, makes the scope and the permissible deviation from the reference pattern data of this testing dependent on the credit amount to be granted, which has previously been received from the terminal (EG).

## Revendications

1. Procédé pour déterminer l'identité du titulaire d'une carte à puce, notamment d'une carte de crédit, utilisant un système de reconnaissance vocale, selon lequel
• après introduction de la carte à puce (KK) dans le lecteur de carte (KL) d'un terminal (EG), on lit les données de la carte à puce (KK),
• automatiquement, en actionnant une touche, on met en liaison le terminal (EG) et un calculateur de contrôle (PR) pour transmettre les données lues vers ce calculateur de contrôle (PR),
• à l'aide des données, le calculateur de contrôle (PR) décide s'il doit y avoir un contrôle vocal du titulaire de la carte,
• dans le dernier cas, une liaison est établie automatiquement par le réseau public de télécommunication ou de transmission de données, entre le calculateur de contrôle (PR) et un calculateur central (ZR) pour transmettre vers le calculateur de contrôle (PR) les données des modèles de référence enregistrés dans ce calculateur central (ZR), correspondant aux mots prononcés par le titulaire de la carte,
• le calculateur de contrôle (PR), après réception des données des modèles de référence, fournit au terminal (EG) une annonce qui demande au titulaire de la carte de prononcer des mots prédéterminés,
• après réception de ces mots prononcés effectivement par le terminal (EG), le calculateur de contrôl (PR) forme des modèles de référence vocale à partir de ces mots pour les comparer aux données des modèles de référence du calculateur central (ZR),
• et à l'aide du résultat de la comparaison, le calculateur de contrôle (PR) décide de l'autorisation accordée à la carte à puce.

2. Procédé selon la revendication 1,
caractérisé en ce que
le calculateur central (ZR) transmet au calculateur de contrôle (PR) les données vocales d'annonce concernant le titulaire de la carte en même temps que les données des modèles de référence, le calculateur de contrôle (PR) compose un texte d'annonce défini pour le titulaire de la carte, et ce texte est transmis au terminal (EG) par la liaison existant.

3. Procédé selon la revendication 2,
caractérisé en ce que
le calculateur de contrôle (PR) comporte une unité de synthèse vocale (SSY) et le texte d'annonce est transmis en paroles de synthèse.

4. Procédé selon la revendication 2,
caractérisé en ce que
le texte d'annonce peut également contenir des indications concernant l'endroit du terminal (EG) si de telles données ont été transmises préalablement par le calculateur de contrôle (PR) au calculateur central (ZR).

5. Procédé selon la revendication 2,
caractérisé en ce qu'
à la place du texte d'annonce ou en plus de celui-ci, le calculateur de contrôle (PR) transmet également des données d'affichage vers le terminal (EG) si celui-ci comporte une installation d'affichage (AE).

6. Procédé selon la revendication 1,
caractérisé en ce que
le calculateur de contrôle (PR) est relié à une installation auxiliaire de télécommunication (NA).

7. Procédé selon la revendication 1,
caractérisé en ce que
le calculateur de contrôle (PR) est relié à un poste de transmission (VSt A) du réseau public de télécommunication et de transmission de données (FN).

8. Procédé selon la revendication 1,
caractérisé en ce qu'
en comparant le modèle de référence vocale, le calculateur de contrôle (PR) fait dépendre l'importance et les déviations autorisées par rapport aux données des modèles de référence pour ce contrôle, du montant du crédit accordé, montant qui a été reçu préalablement par le terminal (EG).
